# EUROPÄISCHE PATENTANMELDUNG

(11) **EP 1 734 083 A2**
(43) Veröffentlichungstag der Anmeldung: **20.12.2006**
(21) Anmeldenummer: 06101440.3
(22) Anmeldetag: 09.02.2006
(51) Int. Cl.: C09B 67/22, C09C 3/08, C09C 1/56

(54) **Suspension enthaltend ein wasserunloesliches Farbmittel und eine heterozyklische Verbindung**

(30) Priorität: 01.03.2005 DE 102005009321
(71) Anmelder: DEGUSSA AG, 40474 Düsseldorf (DE)
(72) Erfinder: Kalbitz, Werner, 63517 Rodenbach (DE); Lüdtke, Stephan, 63477 Maintal (DE); Lüthge, Thomas, 63452 Hanau (DE); McIntosh, Ralph, 63457 Hanau (DE); Sieblist, Christian, 97846 Partenstein (DE); Tauber, Gerd, 63500 Seligenstadt (DE); Zimmermann, Jutta, Dr., 63755 Alzenau (DE); Zoch, Heinz, 63477 Maintal (DE)

(57) **Zusammenfassung**

Suspension, enthaltend
(a) mindestens ein wasserunlösliches Farbmittel,
(b) mindestens eine heterocyclische Verbindung der allgemeinen Formel 1 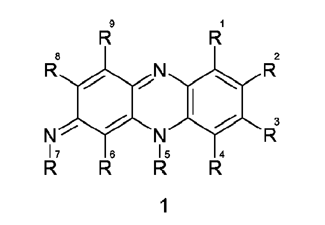 und
(c) Wasser und/oder ein- oder mehrwertiger Alkohol.

Die wässrige Suspension wird hergestellt, indem man das wasserunlösliche Farbmittel und die heterocyclische Verbindung der Formel 1 in Wasser und/oder ein- oder mehrwertigem Alkohol dispergiert.

Sie kann zur Herstellung von Tinten, Ink Jet Tinten, Lacken und Druckfarben verwendet werden.

## Beschreibung

Die Erfindung betrifft eine Suspension, ein Verfahren zu deren Herstellung sowie deren Verwendung.

Es ist bekannt Farbmittel, die im jeweiligen Anwendungsmedium unlöslich sind, für die Einfärbung von Textilien/Fasern (EP 0263412), Papier (US 4366139), Kunststoffen (US 5760112, WO 9523038), Dispersionsfarben (US 3998652, US 3841888) und Beton (WO 01550050), sowie für Ink-Jet Tinten (US 9911935) zu verwenden.

Ferner ist bekannt, im Anwendungsmedium unlösliche Farbmittel, auf Grund weiterer Eigenschaften neben der eigentlichen farbgebenden Wirkung einzusetzen, wie beispielsweise zur Verstärkung, zur antistatischen Ausrüstung oder als Füllstoff. So ist bekannt, wässrige Grafitsuspensionen zum Beispiel für die antistatische Ausrüstung von Materialien wie Textilien oder zur Herstellung von Tonern zu verwenden (PL 178064, JP 08015895) .

Es ist bekannt wässrige, kolloidale Rußsuspensionen zur Einfärbung von Textilien, Leder oder Latizes oder zur Einstellung der Leitfähigkeit von Kunststoffen, Klebstoffen, Silikonen oder Ähnlichem, zur Herstellung von Lacken, Druckfarben oder auch direkt als Tinten, zum Beispiel für Tintenstrahldrucker (Ink-Jet), zu verwenden (US-A 5,085,698, US-A 5,320,668).

Weiterhin ist bekannt Suspensionen von im Anwendungsmedium unlöslichen Farbmitteln unter Verwendung von Azoverbindungen, die gleichzeitig als Netzmittel wirken, ohne Zugabe von weiteren Netzmitteln herzustellen (US 9, 911, 935) .

Ferner ist bekannt, wässrige Rußsuspensionen unter Verwendung von wasserlöslichen Netzmitteln, beispielsweise Acrylharzen (US-A 5,609,671) oder Ethoxylaten (DE 19824947 Al), herzustellen.

Nachteile der bekannten netzmittelstabilisierten Rußsuspensionen sind, bei Verwendung von nichtionogenen Tensiden, das zu hohe Zetapotential und die niedrige Oberflächenspannung und bei Verwendung von anionischen Tensiden, die zu starke Benetzung des Papiers auf Grund der starken Wechselwirkungen mit der ebenfalls anionischen Papierbeschichtung, was zu niedrigen optischen Dichten beziehungsweise Farbstärken führt.

Ein Nachteil der Verwendung von Azoverbindungen zur Stabilisierung von im Anwendungsmedium unlöslichen Farbmitteln ist das Auftreten von aromatischen Aminen als deren potentielle Abbauprodukte. Eine große Anzahl dieser primären aromatischen Amine steht unter dem Verdacht cancerogener Wirkung. Desweiteren können Azoverbindungen oxidationsempfindlich sein, was zu Instabilitäten bei der Verwendung führen kann. Ein weiterer Nachteil des Einsatzes von Azoverbindungen ist der hohe Anteil anorganischer Salze wie Natriumchlorid oder Natriumsulfat, der bei deren Herstellung zwangsläufig anfällt. Anorganische Salze führen schon in sehr geringen Konzentrationen zur starken und irreversiblen Erhöhung der Viskosität.

Aufgabe der vorliegenden Erfindung ist es, eine Suspension zur Verfügung zu stellen, die eine verbesserte Stabilität und Verträglichkeit in den jeweiligen Anwendungssystemen zeigt, hohe optische Dichten beziehungsweise Farbstärken auf Trägermaterialien, wie beispielsweise Papier, Latex, Kunststoff oder Textilien, sowie ein niedriges Zetapotential und eine hohe Oberflächenspannung aufweist.

Gegenstand der Erfindung ist eine Suspension, welche dadurch gekennzeichnet ist, dass diese
(a) mindestens ein wasserunlösliches Farbmittel,
(b) mindestens eine heterocyclische Verbindung der allgemeinen Formel 1, 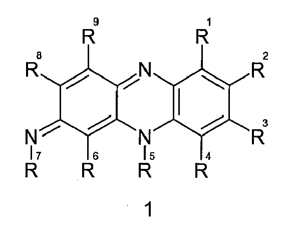 wobei R¹ - R⁹ gleich oder verschieden sind und aus Wasserstoff, hydrophilen oder hydrophoben Gruppen, Akzeptor- oder Donatorsubstituenten oder aliphatischen, aromatischen oder heteroaromatischen, acyclischen oder cyclischen Systemen mit Akzeptor-, Donator-, hydrophilen oder hydrophoben Gruppen bestehen,
   und
(c) Wasser und/oder ein- oder mehrwertigen Alkohol enthält.

Der ein- oder mehrwertige Alkohol kann Butanol, Ethanol, Butylglykol, Ethoxypropanol, Ethylenglykol, Glycerin, Pentandiol, Propandiol oder Polyol sein.

Die aliphatischen, aromatischen oder heteroaromatischen, acyclischen oder cyclischen Systeme können weitere Reste, wie zum Beispiel hydrophile oder hydrophobe, geladene oder ungeladene Gruppen, enthalten.

Die erfindungsgemäße Suspension kann kolloidal sein.

Kolloidal bedeutet die gleichmäßige Verteilung von Teilchen mit Durchmesser von 10 nm - 10 µm in einem Suspensionsmittel. Für die Verwendung in Tinten ist eine niedrige Viskosität je nach Druckverfahren vorteilhaft, um die gewünschten Druckeigenschaften, beispielsweise Druckschärfe, zu erhalten. Ein niedriges Zetapotential, das den Ladungszustand der Teilchen in der Suspension beschreibt, ist eine Messgröße für die gute Suspensionsstabilität. Eine hohe Oberflächenspannung beeinflußt, beispielsweise beim Inkjet-Verfahren positiv die Tröpfchenbildung. Ein hoher Dispergiergrad ist von wesentlicher Bedeutung für eine gute Lagerstabilität, für gute koloristische Eigenschaften in der Anwendung und zur Verhinderung von Düsenverstopfungen speziell beim Inkjet-Verfahren.

Als wasserunlösliches Farbmittel können anorganische oder organische Pigmente, wie beispielsweise Kohlenstoffmaterialien, Weißpigmente und Buntpigmente, wie Gelbpigmente, Cyanpigmente, Magentapigmente oder Grünpigmente, eingesetzt werden.

Als Kohlenstoffmaterial kann Ruß eingesetzt werden. Beispielsweise kann als Ruß Furnaceruß, Gasruß, Channelruß, Flammruß, Thermalruß, Acetylenruß, Plasmaruß, Inversionsruß, bekannt aus DE 195 21 565, Si-haltige Ruße, bekannt aus WO 98/45361 oder DE 19613796, oder metallhaltige Ruße, bekannt aus WO 98/42778, Lichtbogenruße und Kohlenstoffmaterialien, die Nebenprodukte chemischer Produktionsprozesse sind, eingesetzt werden. Das Kohlenstoffmaterial kann durch vorgelagerte Reaktionen aktiviert werden. Es können Kohlenstoffmaterialien, die als Verstärkerfüllstoff in Kautschukmischungen verwendet werden, eingesetzt werden. Es können Pigmentruße eingesetzt werden. Weitere Kohlenstoffmaterialien können sein: leitfähiges Kohlenstoffmaterial, Kohlenstoffmaterial zur UV-Stabilisierung, Kohlenstoffmaterial als Füllstoff in anderen Systemen als Kautschuk, wie zum Beispiel in Bitumen oder Kunststoff, oder Kohlenstoffmaterial als Reduktionsmittel in der Metallurgie.

Als Kohlenstoffmaterial können Graphitpulver, Graphitfasern, Bitumen, Kohlenstofffasern, Kohlenstofffibrillen, Kohlenstoffnanoröhren (Carbon Nanotubes), Kohlenstoffgewebe, Kohlenstoffaerogele, glasartige Kohlenstoffprodukte und Aktivkohle eingesetzt werden.

Der Gasruß kann einen Flüchtigenanteil (950°C) von < 25 Gew.-% aufweisen. Der Gasruß kann eine BET-Oberfläche von 80 bis 350 m² / g aufweisen. Der Gasruß kann eine Primärteilchengröße, gemessen nach ASTM D3849, von 8 bis 40 nm, bevorzugt von 13 bis 30 nm, insbesondere bevorzugt von 13 - 20 nm, aufweisen. Der Gasruß kann einen Ölbedarf, gemessen nach DINISO 787/5, von 250 bis 1000 g/100 g aufweisen. Der Gasruß kann auch eine Mischung von verschiedenen Gasrußen sein.
Als Gasruße können beispielsweise Farbruß FW 200, Farbruß FW 2, Farbruß FW 2 V, Farbruß FW 1, Farbruß FW 18, Farbruß S 170, Farbruß S 160, Spezialruß 6, Spezialruß 5, Spezialruß 4, Spezialruß 4A, NIPex 150, NIPex 160 IQ, NIPex 170 IQ, NIPex 180 IQ, Printex U, Printex V, Printex 140 U oder Printex 140 V der Firma Degussa AG eingesetzt werden.

Als Ruße können ferner Elftex 570, Elftex 430, Elftex 125, Regal 350R, Raven 1080U oder Raven 1255 der Firma Cabot oder Conductex 975 oder Conductex SC der Firma Columbien eingesetzt werden.

Der Furnaceruß kann einen Flüchtigenanteil (950°C) von < 5 Gew.-% aufweisen. Der Furnaceruß kann eine BET-Oberfläche von 20 bis 350 m²/g aufweisen. Der Furnaceruß kann eine Primärteilchengröße von < 70 nm aufweisen. Der Furnaceruß kann eine DBP von 35 bis 450 ml/100g aufweisen. Der Furnaceruß kann auch eine Mischung von verschiedenen Furnacerußen sein. Der Furnaceruß kann einen pH-Wert zwischen 2 und 10,5 aufweisen.

Als Furnaceruße können beispielsweise Printex 60, Printex L, Printex L6, Printex 300, Printex 25, Spezialschwarz 100, Spezialschwarz 250, Spezialschwarz 350 und Spezialschwarz 550 der Firma Degussa AG eingesetzt werden.

Als Flammruß kann zum Beispiel Flammruß 101 der Firma Degussa AG eingesetzt werden.

Als Buntpigmente können Titandioxid, Kreide, Calziumcarbonat, Pigment Yellow 128, Pigment Yellow 180, Pigment Yellow 155, Pigment Yellow 97, Pigment Yellow 120, Pigment Yellow 15, Pigment Yellow 101, Pigment Yellow 108, Pigment Yellow 24, Pigment Yellow 151, Pigment Yellow, Pigment Violet 19, Pigment Violet 3, Pigment Red 122, Pigment Red 57:1, Pigment Red 184, Pigment Blue 15:3, Pigment Blue 29, Pigment Blue 27, Pigment Blue 61, Pigment Black 6, Pigment Black 1, Pigment Black 11, Pigment Black 7, Pigment Black 10, Pigment Black 8, Pigment Black 9. 83 eingesetzt werden.

Die heterocyclische Verbindung der allgemeine Formel 1 kann ein- oder mehrfach in der heterocyclische Verbindung der allgemeinen Formel 1 enthalten sein. Die Substituenten R¹ - R⁹ können gleich oder verschieden und unsubstituierte oder substituierte, aliphatische oder aromatisch Substituenten, wie Phenyl- oder Naphthyl- oder heteroaromatische Substituenten, wie beispielsweise Pyrrolyl-, Pyridinyl-, Furyl- oder Puryl-, Akzeptorsubstituenten, wie -COOR¹⁰ , - CO-R¹⁰, -CN, -SO₂R¹⁰ oder -SO₂OR¹⁰, mit R¹⁰ = H, Alkalimetallkation, Ammonium, Alkyl, Aryl oder funktionalisiertes Alkyl oder Aryl, wie beispielsweise ω-Carboxyalkyl, HSO₃-CₓH_{y}-, H₂N-CₓH_{y}- oder H₂N-SO₂-CₓH_{y}- (x =1-20, y = 1-45), Donatorsubstituenten, wie Alkyl-, Arylgruppen, OR¹¹, N(R¹¹)₂, SR¹¹ oder P(R¹¹)₂, mit R¹¹ = H, Alkyl, Aryl oder funktionalisiertes Alkyl oder Aryl, Oligomere oder Polymere der Form -(O-R¹²)_{y}-OR¹³, mit R¹²= funktionalisierte oder nicht funktionalisierte, verzweigte oder unverzweigte, gesättigte oder ungesättigte, aliphatische, aromatische oder gemischt aliphatische /aromatische zweibindige Kohlenwasserstoffgruppe und R ¹³= H, Alkyl oder Aryl, sein.

Die heterocyclische Verbindung der Formel 1 kann positiv oder negativ geladen oder ungeladen sein. Im Fall einer elektrisch geladenen heterocyclischen Verbindung kann die Ladung durch einen entsprechend entgegengesetzt geladenes Gegenion X ganz oder teilweise abgesättigt sein. Das Gegenion X kann ein positiv geladenes Metallion, wie Alkaliion, Erdalkaliion oder Ammoniumion N(R¹⁴)₄⁺, mit R¹⁴ gleich oder verschieden und H, Alkyl, Aryl, funktionalisiertes Alkyl oder Aryl, wie beispielsweise ω-Carboxyalkyl, HSO₃-CₓH_{y}-, H₂N-CₓH_{y}-, H₂N-SO₂-CₓH_{y}- (x =1-20, y = 1-45), Monomere, Dimere, Trimere, Oligomere oder Polymere der Form -(O-R¹²)_{y}-OR¹³ sein.
Im Falle eines negativ geladenen Gegenions X kann es sich dabei um Halogenid, wie F⁻, Cl⁻, Br⁻ oder J⁻, Sulfat, Hydrogensulfat, Carbonat, Hydrogencarbonat, Phosphat, Hydrogenphosphat, Bromat, Bromit, Chlorit, Hypochlorit, Chlorat, Perchlorat, Tetrafluoroborat oder Tetraphenylborat handeln.
Die heterocyclische Verbindung der Formel 1 kann ganz oder teilweise als Radikalsalz vorliegen.

Als heterocyclische Verbindung der allgemeinen Formel 1 können beispielsweise verwendet werden:

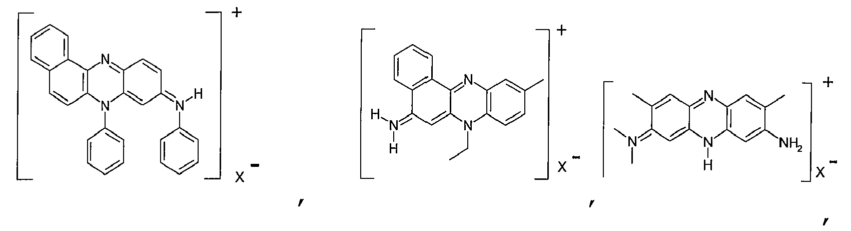

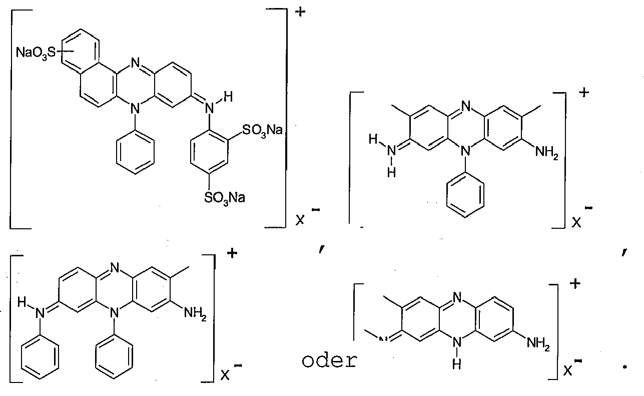

Der Anteil der heterocyclischen Verbindung der Formel 1 in der erfindungsgemäßen Suspension kann unter 5 Gew.-%, bevorzugt unter 3 Gew.-%, sein.

Die erfindungsgemäße Suspension kann netzmittelfrei sein.

Die erfindungsgemäße Suspension kann ein Biozid enthalten. Das Biozid kann in Mengen von 0,01 -1,0 Gew.-% zugesetzt werden. Als Biozid können Isothiazolinon-Derivate, Formaldehydabspalter oder Kombinationsprodukte beider Produktklassen verwendet werden. Beispielsweise können als Biozid Parmetol der Firma Schülke & Mayr, Ebotec der Firma Bode Chemie, Acticide der Firma Thor Chemie, Mergal der Firma Troy oder Proxel der Firma Zeneca eingesetzt werden.

Weiterhin können Netzmittel in Mengen von 0,01 - 1 Gew.-%, vorzugsweise von 0,4 - 0,6 Gew.-%, bezogen auf die Gesamtsuspension, zugesetzt werden. Als Netzmittel können Verbindungen, wie Fettalkoholethoxylate, Polyacrylsäure oder/und deren Derivate, Copolymere enthaltend Acrylsäure und/oder Acrylsäurederivate und/oder Styrole und/oder Styrolderivate und/oder Polyether, Ligninsulfonate, Alkylbenzolsulfonate, Naphthalinsulfonsäurederivate oder Copolymere enthaltend Maleinsäureanhydrid und/oder Maleinsäurederivate eingesetzt werden. Die Copolymere können statistische oder alternierende Block- oder Pfropfcopolymere sein. Beispielsweise kann als dispergierunterstützendes Additiv Joncryl 678, Joncryl 680, Joncryl 682 oder Joncryl 690 der Firma Johnson Polymer B.V. eingesetzt werden.

In einer bevorzugten Ausführungsform kann als dispergierunterstützendes Additiv vollständig Ammonium-oder Alkalihydroxid -neutralisierte Formen, insbesondere NaOH neutralisierte Formen, der Styrol-Acrylsäure Copolymere eingesetzt werden.

Andere Typen von Netzmitteln können ebenfalls zur Herstellung der erfindungsgemäßen Suspension eingesetzt werden.

Des weiteren können Additive, wie Ketone, zum Beispiel Methyl-ethylketon, Methyl-isobutylketon oder Diisobutylketon, Alkohole, beispielsweise 1,5-Pentandiol, Glykole, beispielsweise Dipropylenglykol, Heterocyclen, beispielsweise 2-Pyrrolidon, oder Glyzerin der erfindungsgemäßen Suspension zugesetzt werden.

Der Anteil der Additive in der erfindungsgemäßen wässrigen, Suspension kann unter 25 Gew.-%, bevorzugt unter 15 Gew.-%, sein.

Ein weiterer Gegenstand der Erfindung ist ein Verfahren zur Herstellung der erfindungsgemäßen Suspension, welches dadurch gekennzeichnet ist, dass man das wasserunlösliche Farbmittel und die heterocyclische Verbindung der allgemeinen Formel 1 in Wasser und/oder ein- oder mehrwertigem Alkohol dispergiert.

Die Dispergierung kann man mit Perlmühlen, Ultraschall-Geräten, Hochdruckhomogenisatoren, Microfluidizern, Dissolvern, einem Rotor-Stator (Ultra-Turrax) oder vergleichbaren Aggregaten durchführen. Im Anschluß an die Dispergierung kann die wässrige Suspension durch Zentrifugieren und/oder Filtrieren gereinigt werden.

Die erfindungsgemäße Suspension kann in Tinten, Ink Jet Tinten, Lacken und Druckfarben verwendet werden.

Die erfindungsgemäße Suspension kann zur Verstärkung, Einfärbung, Leitfähigkeitsausrüstung, zum Beipiel antistatischen Ausrüstung oder leitfähigen Ausrüstung, und UV-Schutz von Kunststoffen (zum Beispiel Polyacrylat-Dispersionen: Homo- und Copolymere aus Acryl- und Methacrylsäureestern, Acrylsäureester und Styrol, Acrylsäureestern und Vinylacetat, Vinylacetat und Maleinsäureester; Latex-Dispersionen: Butadien, Styrol und Acrylnitril (Styrol-Butadien und Acrylnitril-Butadien), Polychloropren, Acyrylnitril-Butadien-Styrol (ABS), Acrylnitril-Butadien; Polyurethan-Dispersionen: Polyurethan-Acrylat-Dispersionen, Epoxi-Polyurethan- und Polyurethan-Epoxi-Acrylat-Dispersionen; Polyvinylacetat: Homo- und Copolymere, Vinylacetat-Ethylen-Copolymeren, Vinylacetat-Ethylen-Acrylat-Terpolymer, Vinylacetat-Acrylat-Copolymer, Vinylacetat-Versatat-Copolymeren, Ethylen-Vinylchlorid-, Vinylacetat-Maleinat; Epoxid-Harze: selbstvernetzend, oxidativ oder UV-härtend, sowie mit und ohne Weichmacher), Textilien, Leder, Klebstoffen, Latizes, Silikonen, Beton, Baustoffen, Papier, Fasern, Erde, Holz, Tinten, Ink Jet Tinten, Lacken und Druckfarben verwendet werden.

Die erfindungsgemäße Suspension kann in Bautenfarben, Druckfarben, Kunststoffdispersionen oder Klebstoffen verwendet werden.

Ein weiterer Gegenstand der Erfindung ist eine Tinte, welche dadurch gekennzeichnet ist, dass diese die erfindungsgemäße Suspension enthält.

Ein weiterer Gegenstand der Erfindung ist ein Kunststoff, welcher dadurch gekennzeichnet ist, dass dieser die erfindungsgemäße Suspension enthält.

Ein Vorteil der erfindungsgemäßen Suspension ist die Verwendung von azogruppenfreien heterocyclischen Verbindungen. Weitere Vorteile der erfindungsgemäßen Suspension von im Anwendungsmedium unlöslichen Farbmitteln sind die hohen optische Dichten, das niedrige ZetaPotential, die hohe Oberflächenspannung, die guten Lagerstabilitäten und ein hoher Dispergiergrad.

### Beispiele

### Messung der Farbtiefe

| | |
|---|---|
| Messgerät | Datacolor Spectraflash 600 PLUS |
| Meßgeometrie | d / 8° |
| Lichtart | D 65 / 10°; mit UV-Filter |
| sonstige Angaben | Messöffnung 30mm ohne Glanzeinschluss |
| Auswertesoftware | BCSWin Version 2.2 2000 (BASF Color System for Windows) |

Das Gerät wird vor der Messung gemäß den Herstellerangaben kalibriert.
Die Messung der Probe erfolgt durch die Folie (Folienseite oben).

### Messung der Farbstärke

| | |
|---|---|
| Messgerät | Datacolor Spectraflash 600 PLUS |
| Meßgeometrie | d / 8° |
| Lichtart | D 65 / 10°; mit UV-Filter |
| sonstige Angaben | Messöffnung 30mm ohne Glanzeinschluss |
| Auswertesoftware | BCSWin Version 2.2 2000 (BASF Color System for Windows) |

Das Gerät wird vor der Messung gemäß den Herstellerangaben kalibriert.
Die Messung der Probe erfolgt durch die Folie (Folienseite oben).

### Messung der Viskosität

Gemessen wird mit dem Brookfield DV II+ mit der Spindel S93(Kreuzbalkenspindel) bei 30Upm. Dazu wird das Gerät so eingestellt, dass die Spindel vollkommen in die Flüssigkeit eintaucht und ca. 1cm über dem Gefäßboden schwebt. Die Messtemperatur beträgt 23°C.
Die Messung läuft so lange bis sich das Gerät auf einen Wert eingependelt hat.

### Beschreibung der Untersuchung mit dem Lichtmikroskop

Ein Tropfen der zu beurteilenden Dispersion wird auf einen Objektträger gebracht und mit einem Abdeckgläschen abgedeckt. Nun wird auf den Tropfen vorsichtig Druck ausgeübt (z.B. mit dem Daumen) bis eine bräunliche durchsichtige Schicht entsteht. Es ist zu vermeiden, zu reiben oder anderstweitig Scherkräfte auszuüben. Der Objektträger wird unter ein Durchlichtmikroskop mit min. 400 facher Vergrößerung gelegt (z.B. Nikon Optiphot). Neben der Gleichmäßigkeit der Partikelgrößen lässt sich beurteilen, ob eine Dispersion vorliegt oder ein geflocktes System. Bei einer Dispersion bewegen sich die Teilchen auf Grund der Brownschen Molekularbewegung völlig unkoordiniert. Bei einer geflockten Dispersion ist eine gerichtete Strömung zu erkennen.

### Beispiel 1-3

Benötigte Menge Wasser (Tabelle 1) wird im Dispergiergefäß (Polybecher) eingewogen. Dispergierhilfsmittel (Tabelle 1) bzw. Nigrosin (Tabelle 1) wird eingewogen und im Wasser vollständig gelöst. Der Ruß (Tabelle 1) wird eingewogen und in die Lösung gegeben. Der Ruß wird mit einem Spatel bis zur vollständigen Benetzung eingerührt. Es wird mit dem Ultraschallprozessor (Hielscher UIP 500) 1 Minute lang dispergiert. Die Dispersion wird unter dem Lichtmikroskop überprüft.

Nigrosin ist ein Farbstoff, ein Produkt aus der Umsetzung von Nitrobenzol und Anilin in Gegenwart von Eisen(II)chlorid und Salzsäure, enthaltend eine komplexe Mischung aus Phenazin-Farbstoffen der allgemeinen Formel 1. Die Dünnschichtchromatographie zeigt eine große Anzahl an Verbindungen die ebenfalls in Indulin vorhanden sind, besonders Indulin 6B mit der Formel

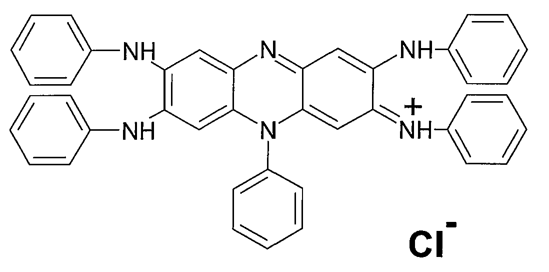

Im Gegensatz zu Indulin besteht der Farbstoff hauptsächlich aus Phenazinen mit höheren Molekulargewichten. Es kann zwischen wasser-, ethanol- und fettlöslichen Nigrosinen unterschieden werden. Das in den Beispielen verwendete Nigrosin WLF Uncut Powder ist wasserlöslich.

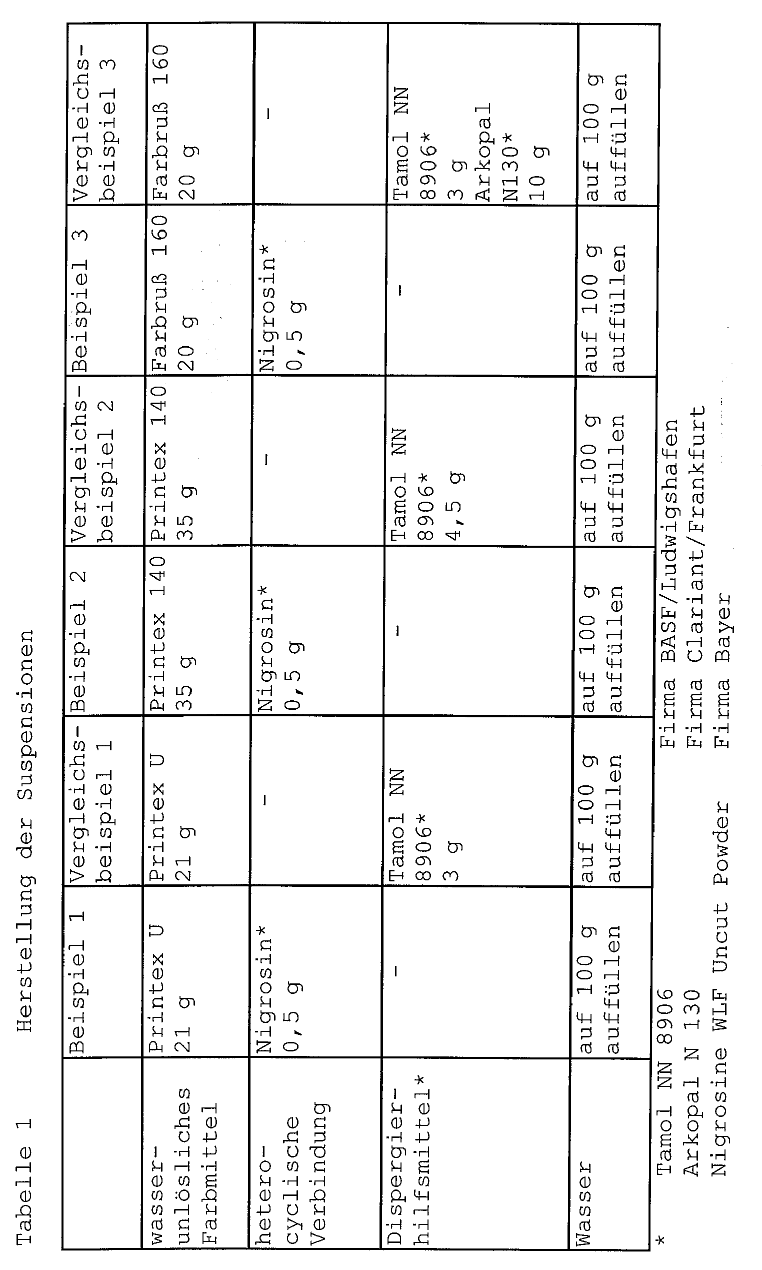

### Beispiel 4-6

80g Kunststoffdispersion werden in ein Gefäß eingewogen und 20 g der Suspension werden zugefügt. Mit Hilfe eines Metallspatels wird durch vorsichtiges Umrühren eine homogene Mischung hergestellt (Tabelle 2).
Von dieser Mischung wird mit Hilfe des Erichson "K Comfort Coater" ein 45µm starker Film auf Fotokarton aufgezogen. Die Schwärze dieses Films wird mit Hilfe eines Farbmessgeräts bestimmt. Die gemessene absolute Farbtiefe ist in Tabelle 2 dargestellt.

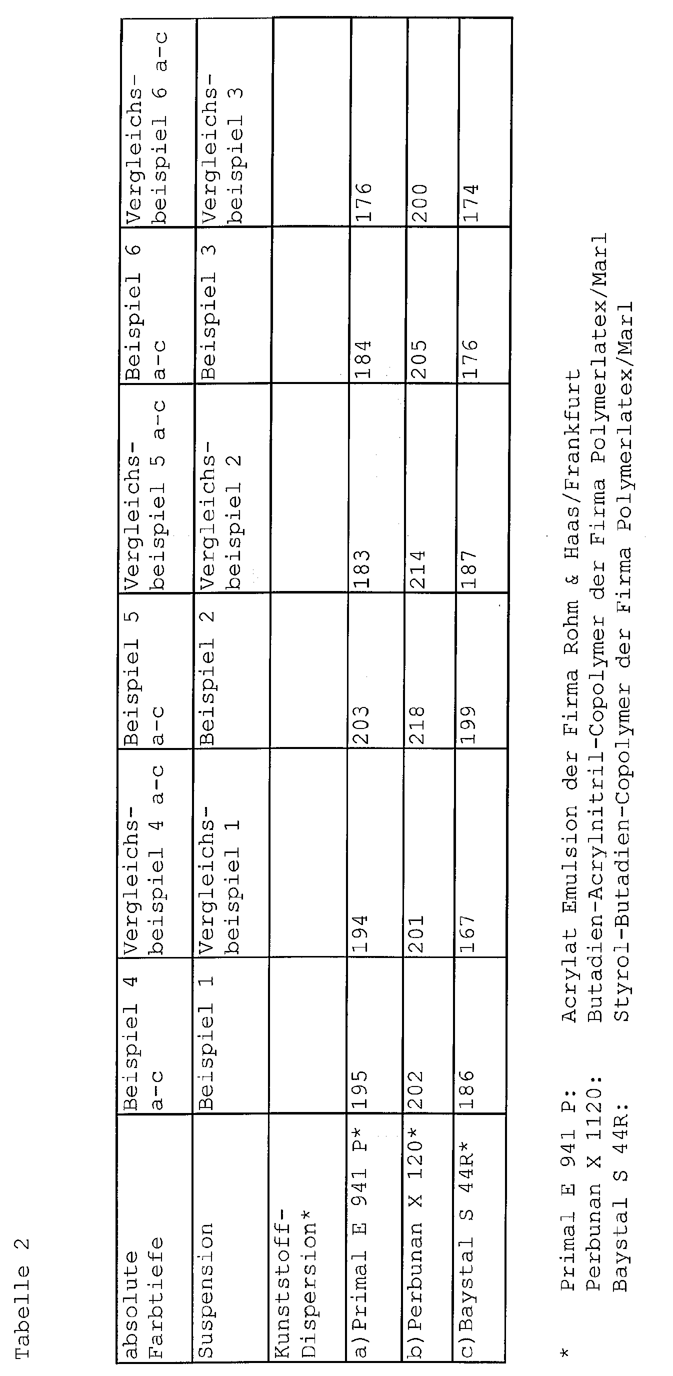

Bei allen mit den erfindungsgemäßen Suspensionen hergestellten Filmaufstrichen werden höhere Schwarzzahlen (absolute Farbtiefen) gemessen, was auf eine bessere Verträglichkeit von Suspension und Kunststoffdispersion schließen läßt.

### Beispiel 7-10

80 g Kunststoffdispersion werden in ein Gefäß eingewogen und 20 g der Suspension aus Beispiel 1 bzw. Vergleichsbeispiel 1 werden hinzugefügt. Mit Hilfe eines Metallspatels wird durch vorsichtiges Umrühren eine homogene Mischung hergestellt.

49,5 g der Weißdispersion (Isposan perfect der Firma Sto AG) werden in ein Gefäß eingewogen und 0,5 g der mit der Suspension eingefärbten Kunststoffdispersion werden hinzugefügt. Mit Hilfe eines Metallspatels wird durch vorsichtiges Umrühren eine homogene Mischung hergestellt. Die Mischung wird im Hauschild Turbomischer 30sec. bei 300U/min homogenisiert. Von dieser Mischung wird mit Hilfe eines 200 µm Rakels eine dünne Schicht auf eine Acetatfolie aufgestrichen, die durch Lagerung an der Luft zu einem Film trocknet.

In Tabelle 3 ist die gemessene absolute Farbstärke dargestellt.

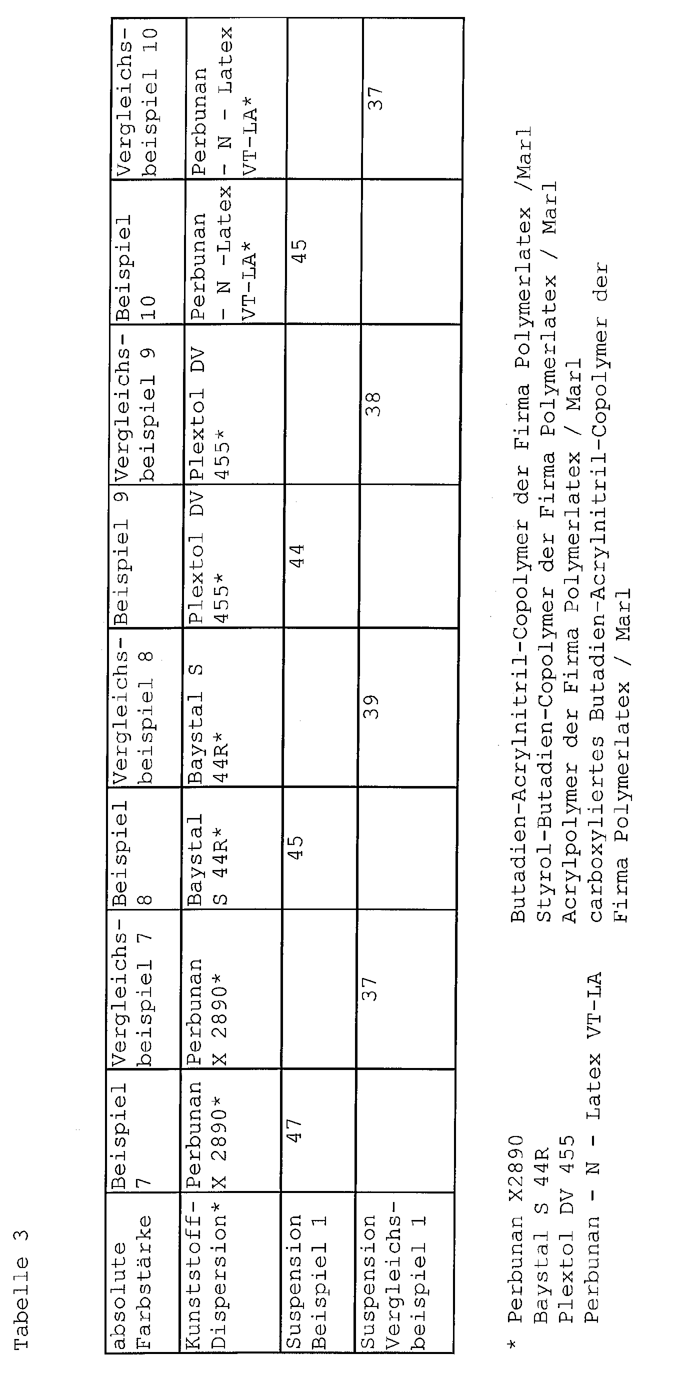

Bei allen mit der erfindungsgemäßen Suspension hergestellten Filmaufstrichen werden höhere Farbstärkewerte erhalten, was auf eine bessere Verträglichkeit der Suspension in dem Stoffgemisch (Kunststoffdispersion und Weiß-Dispersion) schließen läßt.

### Beispiel 11

70 g Kunststoffdispersion werden in ein Gefäß eingewogen und 30 g der Suspension aus Beispiel 1 bzw. Vergleichsbeispiel 1 werden hinzugefügt. Mit Hilfe eines Metallspatels wird durch vorsichtiges Umrühren eine homogene Mischung hergestellt. 50 ml davon werden in ein Becherglas überführt, um die Viskositätsmessung durchzuführen.

In Tabelle 4 ist die Viskosität dargestellt.

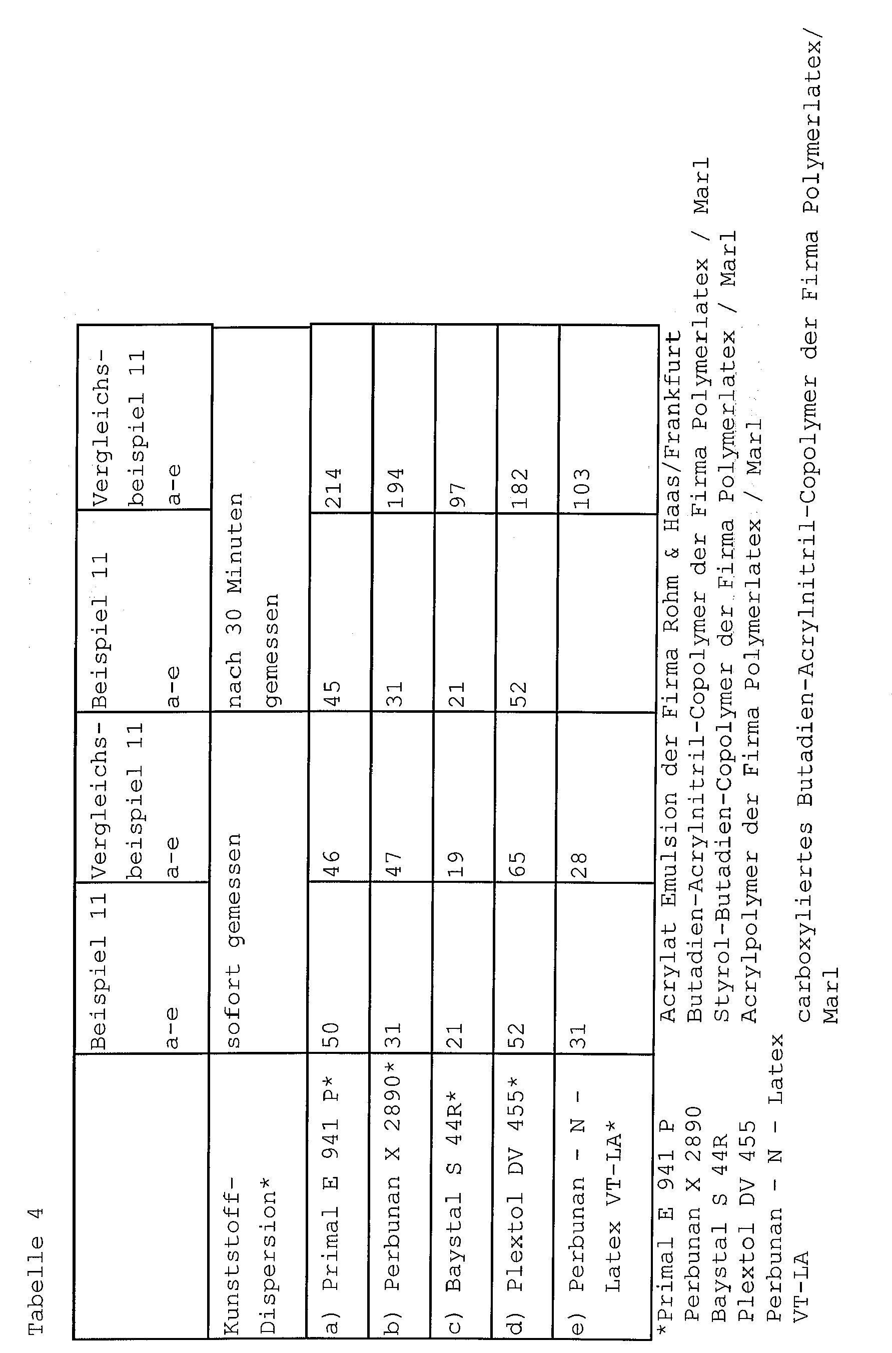

Bei allen mit der erfindungsgemäßen Suspension hergestellten Kunststoffdispersionen kommt es zu keiner oder nur sehr geringfügigen Änderung der Viskosität, während bei den Vergleichsbeispielen eine starker Anstieg der Viskosität schon nach 30 Minuten beobachtet wird. Die Verträglichkeit von Suspension und Kunststoffdispersion ist im Fall der erfindungsgemäßen Suspension gegeben, bei den Vergleichsbeispielen nicht.

## Patentansprüche

1. Suspension, **dadurch gekennzeichnet, dass** diese
(a) mindestens ein wasserunlösliches Farbmittel,
(b) mindestens eine heterocyclische Verbindung der allgemeinen Formel 1 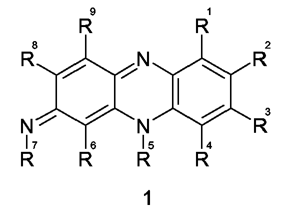 wobei R¹ - R⁹ gleich oder verschieden sind und aus Wasserstoff, hydrophilen oder hydrophoben Gruppen, Akzeptor- oder Donatorsubstituenten oder aliphatischen, aromatischen oder heteroaromatischen, acyclischen oder cyclischen Systemen mit Akzeptor-, Donator-, hydrophilen oder hydrophoben Gruppen bestehen,
und
(c) Wasser und/oder ein- oder mehrwertigen Alkohol enthält.

2. Suspension nach Anspruch 1, **dadurch gekennzeichnet, dass** das wasserunlösliche Farbmittel ein anorganisches oder organisches Pigment ist.

3. Suspension nach Anspruch 1 oder 2, **dadurch gekennzeichnet, dass** das wasserunlösliche Farbmittel Ruß, Titandioxid, Kreide, Calziumcarbonat, Pigment Yellow 128, Pigment Yellow 180, Pigment Yellow 155, Pigment Yellow 97, Pigment Yellow 120, Pigment Yellow 15, Pigment Yellow 101, Pigment Yellow 108, Pigment Yellow 24, Pigment Yellow 151, Pigment Yellow, Pigment Violet 19, Pigment Violet 3, Pigment Red 122, Pigment Red 57:1, Pigment Red 184, Pigment Blue 15:3, Pigment Blue 29, Pigment Blue 27, Pigment Blue 61, Pigment Black 6, Pigment Black 1, Pigment Black 11, Pigment Black 7, Pigment Black 10, Pigment Black 8 oder Pigment Black 9. 83 ist.

4. Suspension nach Anspruch 1, **dadurch gekennzeichnet, dass** die allgemeine Formel 1 ein- oder mehrfach in der heterocyclischen Verbindung der allgemeinen Formel 1 enthalten ist und die Substituenten R¹ - R⁹ gleich oder verschieden und Phenyl-, Naphthyl-, heteroaromatische Substituenten, -COOR¹⁰, -CO-R¹⁰, -CN, -SO₂R¹⁰, -SO₂OR¹⁰, mit R¹⁰ = H, Alkalimetallkation, Ammonium, Alkyl, Aryl oder funktionalisiertes Alkyl oder Aryl, Alkyl-, Arylgruppen, OR¹¹, N(R¹¹)₂, SR¹¹, P(R¹¹)₂, mit R¹¹=H, Alkyl, Aryl oder funktionalisiertes Alkyl oder Aryl, oder Oligomere oder Polymere der Form -(O-R¹²)_{y}-OR¹³, mit R¹²= funktionalisierte oder nicht funktionalisierte, verzweigte oder unverzweigte, gesättigte oder ungesättigte, aliphatische, aromatische oder gemischt aliphatische /aromatische zweibindige Kohlenwasserstoffgruppe und R¹³ = H, Alkyl oder Aryl, sind.

5. Suspension nach Anspruch 1, **dadurch gekennzeichnet, dass** der Anteil der heterocyclischen Verbindung der Formel 1 < 5 Gew.-% ist.

6. Suspension nach Anspruch 1, **dadurch gekennzeichnet, dass** zusätzlich Biozide, Netzmittel oder Additive enthalten sind.

7. Suspension nach Anspruch 6, **dadurch gekennzeichnet, dass** das Netzmittel ein Fettalkoholethoxylat, Polyacrylsäure oder/und deren Derivate, Copolymer enthaltend Acrylsäure und/oder Acrylsäurederivate und/oder Styrole und/oder Styrolderivate und/oder Polyether, Ligninsulfonat, Alkylbenzolsulfonat, Naphthalinsulfonsäurederivaten oder Copolymer enthaltend Maleinsäureanhydrid und/oder Maleinsäurederivate oder Kombinationen aus den genannten Verbindungen ist.

8. Suspension nach Anspruch 6, **dadurch gekennzeichnet, dass** der Anteil des Netzmittels zwischen 0,01 und 1 Gew.-% ist.

9. Suspension nach Anspruch 6, **dadurch gekennzeichnet, dass** das Additiv Keton, Alkohol, Heterocyclen, Glykol oder Glyzerin ist.

10. Suspension nach Anspruch 6, **dadurch gekennzeichnet, dass** der Anteil an Additiv unter 25 Gew.-% ist.

11. Verfahren zur Herstellung der Suspension nach Anspruch 1, **dadurch gekennzeichnet, dass** man das wasserunlösliche Farbmittel und die heterocyclische Verbindung der Formel 1 in Wasser und/oder ein- oder mehrwertigem Alkohol dispergiert.

12. Verfahren zur Herstellung der Suspension nach Anspruch 11, **dadurch gekennzeichnet, dass** man die Dispergierung mit Perlmühlen, Ultraschall-Geräten, Dissolver, Hochdruckhomogenisatoren, Microfluidizer, Rotor-Stator oder vergleichbaren Aggregaten durchführt.

13. Verwendung der Suspension nach Anspruch 1 zur Einfärbung, antistatischen Ausrüstung und/oder UV-Schutz von Kunststoffen, Latizes, Textilien, Leder, Klebstoffen, Silikonen, Beton, Baustoffen, Papier, Fasern und Erde.

14. Verwendung der Suspension nach Anspruch 1 in Tinten, Ink Jet Tinten, Lacken und Druckfarben.

15. Tinte, **dadurch gekennzeichnet, dass** diese die Suspension nach Anspruch 1 enthält.

16. Kunststoff, **dadurch gekennzeichnet, dass** diese die Suspension nach Anspruch 1 enthält.
